# EUROPÄISCHE PATENTSCHRIFT

(11) **EP 2 173 589 B1**
(45) Veröffentlichungstag und Bekanntmachung des Hinweises auf die Patenterteilung: **23.03.2016**
(21) Anmeldenummer: 08784939.4
(22) Anmeldetag: 22.07.2008
(51) Int. Cl.: B60R 25/08, B60T 7/04, B60T 17/22

(54) **ELEKTROMECHANISCHE FESTSTELLBREMSE FÜR EIN KRAFTFAHRZEUG**
ELECTROMECHANICAL PARKING BRAKE FOR A MOTOR VEHICLE
FREIN ÉLECTROMÉCANIQUE DE STATIONNEMENT POUR VÉHICULE AUTOMOBILE

(30) Priorität: 10.08.2007 DE 102007037685
(43) Veröffentlichungstag der Anmeldung: 14.04.2010
(73) Patentinhaber: Bayerische Motoren Werke Aktiengesellschaft, 80809 München (DE)
(72) Erfinder: DEMMER, Stefan, 80937 München (DE)
(74) Vertreter: Kammermeier, Peter Frank
(86) Internationale Anmeldenummer: PCT/EP2008/005974
(87) Internationale Veröffentlichungsnummer: WO 2009/021599

(56) Entgegenhaltungen:
- WO-A-93/13968
- BE-A6- 1 007 496
- DE-A1- 19 636 080
- US-A- 5 675 190

## Beschreibung

Die Erfindung betrifft eine elektromechanische Feststellbremse für ein Kraftfahrzeug mit einem Betätigungselement zur Betätigung einer Radbremse und einer zentralen Steuereinheit zur elektrischen Versorgung des Betätigungselements über zumindest eine Versorgungsleitung.

WO 93/13968 A beschreibt eine Feststellbremse nach dem Oberbegriff des Anspruchs 1.

Aus der DE 102 06 786 A1 ist es bekannt, eine elektrisch ansteuerbare Bremse eines Kraftfahrzeugs als Schutzeinrichtung gegen einen Diebstahl des Kraftfahrzeugs zu verwenden. Als Beispiel für eine solche elektrisch ansteuerbare Bremse nennt die DE 102 06 786 A1 eine Feststellbremse.

Die wirksame Verwendung elektrisch ansteuerbarer Bremsen als Schutzeinrichtung gegen Diebstahl setzt voraus, dass Maßnahmen zur Vorbeugung bzw. Erschwerung einer Umgehung bzw. Aufhebung des Diebstahlschutzes vorgesehen werden.

Es ist eine Aufgabe der Erfindung, eine einfache elektromechanische Feststellbremse der eingangs genannten Gattung anzugeben, die zur wirksamen Verwendung als Schutzeinrichtung gegen Diebstahl geeignet ist.

Gelöst wird diese Aufgabe durch eine elektromechanische Feststellbremse mit den Merkmalen des Anspruchs 1. Vorteilhafte Ausführungsformen und Weiterbildungen der Erfindung ergeben sich aus den abhängigen Ansprüchen.

Die erfindungsgemäße elektromechanische Feststellbremse für ein Kraftfahrzeug weist ein Betätigungselement zur Betätigung einer Radbremse und eine zentrale Steuereinheit zur elektrischen Versorgung des Betätigungselements über zumindest eine Versorgungsleitung auf. Die Versorgung des Betätigungselements kann insbesondere in einer Stromversorgung und/oder einer Spannungsversorgung bestehen.

Die Feststellbremse kann als Diebstahlschutzvorrichtung dienen, wenn eine Betätigung der Radbremse zur Sicherung des Fahrzeugs derart auslösbar ist, dass diese Betätigung nur durch einen berechtigten Nutzer wieder aufhebbar ist. Die Betätigung der Radbremse zur Sicherung des Fahrzeugs kann auch selbsttätig ausgelöst werden, wenn keine elektrische Versorgung an dem Betätigungselement anliegt.

Zur Vermeidung einer Umgehung bzw. Aufhebung eines solchen Diebstahlschutzes muss insbesondere vermieden werden, dass an das Betätigungselement von einem unberechtigten Nutzer eine Spannung angelegt bzw. ein Strom eingeprägt werden kann, der dazu führt, dass die Betätigung der Radbremse aufgehoben wird. Bei vielen gattungsgemäßen Ausführungsformen einer elektromechanischen Feststellbremse genügt für die Aufhebung einer Betätigung der Radbremse bereits die Umkehrung der Polarität einer bei betätigter Radbremse typischerweise an der Versorgungsleitung anliegenden Spannung oder das Anlegen einer Spannung, wenn bei betätigter Radbremse typischerweise keine Spannung an der Versorgungsleitung anliegt.

Erfindungsgemäß ist das Betätigungselement gemeinsam mit einer elektrischen Stelleinheit zur Unterbrechung der Versorgung des Betätigungselements vor äußerem manuellem Zugriff geschützt am Kraftfahrzeug angeordnet. Vorzugsweise ist die elektrische Stelleinheit hierzu unmittelbar bei dem Betätigungselement angeordnet. Beide können auch baulich integriert sein, insbesondere in eine einzige gemeinsame Baueinheit, um eine eventuell angreifbare. Leitungsverbindung zwischen elektrischer Stelleinheit und Betätigungselement zu vermeiden. Sofern jedoch eine solche Leitungsverbindung zwischen elektrischer Stelleinheit und Betätigungselement besteht, wird ein manueller Zugriff auf diese Leitungsverbindung vorzugsweise ebenfalls ausgeschlossen, indem die Leitungsverbindung ebenfalls vor äußerem manuellem Zugriff geschützt am Kraftfahrzeug angeordnet wird.

Vorzugsweise ist das Betätigungselement derart ausgeführt, dass es nach einer Betätigung der Radbremse ohne elektrische Versorgung, und somit auch und insbesondere bei durch die elektrische Stelleinheit unterbrochener elektrischer Versorgung, in einem Zustand verbleibt, in welchem die Radbremse betätigt bzw. wirksam ist.

Das Anlegen einer Spannung bzw. eines Stroms an die Versorgungsleitung noch "vor" der elektrischen Stelleinheit, d.h. zwischen zentraler Steuereinheit und elektrischer Stelleinheit, bleibt somit folgenlos, wenn die elektrische Stelleinheit die Spannung bzw. den Strom nicht an das Betätigungselement weitergibt.

Zur Ermöglichung einer Steuerung der elektrischen Stelleinheit durch die zentrale Steuereinheit ist die elektrische Stelleinheit über eine Steuerleitung mit der zentralen Steuereinheit verbunden. Über diese Steuerleitung ist die elektrische Stelleinheit durch die zentrale Steuereinheit ansteuerbar, um eine Unterbrechung der Versorgung des Betätigungselements zu veranlassen bzw. um eine solche Unterbrechung wieder aufzuheben, d.h. die Versorgung des Betätigungselements wieder herzustellen. Im einfachsten Fall ist die elektrische Stelleinheit als Relais oder elektronischer Schalter ausgeführt und ist durch das Anlegen einer Spannung an die Steuerleitung schaltbar. Die elektrische Stelleinheit kann jedoch auch eine Schaltung zur Auswertung von elektrischen Signalen auf der Steuerleitung umfassen. Es kann dann beispielsweise erforderlich sein, eine bestimmte Impulsfolge oder einen bestimmten Code von der zentralen Steuereinheit über die Steuerleitung an die elektrische Stelleinheit zu senden, um diese zu schalten. Ein solcher Code kann insbesondere zeit- und/oder ereignisabhängig verändert werden.

Die elektrische Stelleinheit soll also von der zentralen Steuereinheit über die Steuerleitung gesteuert werden. Um einem Diebstahl des Kraftfahrzeugs entgegen zu wirken, kann die zentrale Steuereinheit Mittel zur Überprüfung einer Nutzungsberechtigung eines Fahrzeugnutzers aufweisen bzw. mit solchen Mitteln kommunizieren. Sie kann dann die elektrische Stelleinheit nur bei entsprechender Berechtigung des Fahrzeugnutzers so ansteuern, dass die Unterbrechung der Versorgungsleitung aufgehoben wird, bzw. im Falle mangelnder Berechtigung so ansteuern, dass die Versorgungsleitung unterbrochen wird.

Um eine Umgehung bzw: Aufhebung dieses Diebstahlschutzes zu verhindern bzw. zu erschweren, ist durch die zentrale Steuereinheit eine Überwachung der Steuerleitung zur Erkennung einer Manipulation der Steuerleitung durchführbar.

Die Überwachung der Steuerleitung kann beispielsweise in einer absoluten oder relativen Bestimmung des Spannungspegels auf der Steuerleitung bestehen. Die zentrale Steuereinheit ist hierzu vorzugsweise derart ausgeführt, dass Spannungsveränderungen, die nicht durch die zentrale Steuereinheit selbst veranlasst sind, detektierbar sind. Diese können dann, gegebenenfalls unter Berücksichtigung weiterer Voraussetzungen, als Anzeichen für eine Manipulation eingestuft werden.

Sofern an die Steuereinheit mehrere, beispielsweise zwei, Radbremsen mit jeweils zugehörigem Betätigungselement, zugehöriger Versorgungsleitung, zugehöriger elektrischer Stelleinheit und zugehöriger Steuerleitung in der beschriebenen Art und Weise angeschlossen sind, kann eine entsprechende Leitungsüberwachung der jeweiligen Steuerleitung jeweils einzeln vorgenommen werden.

Alternativ kann insbesondere im Falle zweier derart angeschlossener Radbremsen die Leitungsüberwachung vorgenommen werden, indem die Spannungen an beiden Steuerleitungen abgegriffen und in einer Brückenschaltung ausgewertet werden. Auf diese Weise muss der zentralen Steuereinheit nur eine einzige Messleitung zur Überwachung zweier Steuerleitungen zugeführt werden und die zentrale Steuereinheit muss hierfür nur einen Messeingang aufweisen. Insbesondere kann die Brückenschaltung bzw. deren typischerweise in eine Bit-Folge umgesetzte Ströme von einem Prozessor der zentralen Steuereinheit überwacht werden und unplausible Stromwerte können als Indikator für eine Manipulation verwertet werden. Durch die Überwachung der Ströme bzw. deren Summe über zwei Messwiderstande in der Brückenschaltung kann plausibilisiert werden, ob die Summe und die Richtung der Ströme in sich stimmig sind.

Auch andere Auswertungsformen, bei deren Spannungswerte beider Steuerleitungen abgegriffen und in einer Auswerteschaltung in eine einzige Messgröße umgewandelt werden, sind als vorteilhaft anzusehen.

Gemäß einer bevorzugten Ausführungsform der vorliegenden Erfindung ist die Steuerleitung zweidrahtig ausgeführt, beide Drähte sind im Verlauf der Steuerleitung gegeneinander isoliert, jedoch innerhalb der elektrischen Stelleinheit elektrisch leitend miteinander verbunden. Die beiden Drahtenden auf der Seite der zentralen Steuereinheit sind somit bei Unversehrtheit beider Drähte miteinander kurzgeschlossen und eine Leitungsschleife liegt an der zentralen Steuereinheit an. Eine eventuelle Durchtrennung eines der Drähte der Steuerleitung kann somit durch eine Prüfung der Intaktheit dieser Leitungsschleife detektiert werden. Hierzu kann in einen der Drähte ein Überwachungssignal eingespeist werden und dessen unverändertes Anliegen am anderen Draht gemessen werden. Wird das Überwachungssignal trotz Einspeisung nicht oder nur verändert gemessen, so kann dies als Anzeichen für eine Manipulation der Steuerleitung eingestuft werden.

Das genannte Überwachungssignal weist vorzugsweise eine geringe Amplitude auf, die selbst nicht zur Steuerung der elektrischen Stelleinrichtung ausreicht, und wird dem eigentlichen Steuersignal zur Steuerung der elektrischen Stelleinrichtung überlagert. Das Überwachungssignal kann, um einen besonders guten Schutz zu gewährleisten, beispielsweise auf Basis der Werte eines Zufallsgenerators bei der zentralen Steuereinheit erzeugt werden.

Sofern an die Steuereinheit mehrere, beispielsweise zwei, Radbremsen mit jeweils zugehörigem Betätigungselement, zugehöriger Versorgungsleitung und zugehöriger elektrischer Stelleinheit angeschlossen sind, kann eine solche zweidrahtige Steuerleitung für jede Radbremse vorgesehen sein und eine solche Form der Leitungsüberwachung für jede dieser Steuerleitungen jeweils einzeln vorgenommen werden. Alternativ kann eine gemeinsame "durchgeschleifte" Steuerleitung die Stelleinheiten beider Radbremsen steuern. insbesondere kann eine solche gemeinsame durchgeschleifte Steuerleitung als Leitungsschleife über die beiden elektrischen Stelleinheiten geführt werden. Die Intaktheit dieser Leitungsschleife kann dann wie oben beschrieben überwacht werden, indem in ein Ende der Leitungsschleife ein Überwachungssignal eingespeist wird und dessen unverändertes Anliegen am anderen Ende gemessen wird. So kann gegenüber getrennten zweidrahtigen überwachten Steuerleitungen eine Steuer- und Überwachungslogik bei der zentralen Steuereinheit eingespart werden.

Gemäß einer bevorzugten Ausführungsform der vorliegenden Erfindung ist bei Erkennung einer Manipulation der Steuerleitung eine Diebstahlwarnung durch die zentrale Steuereinheit ausgebbar.

Dazu kann die zentrale Steuereinheit mit einer Alarmanlage des Kraftfahrzeugs verbunden sein und so ausgeführt sein, dass bei Erkennung einer Manipulation der Steuerleitung eine Diebstahlwarnungsnachricht von der zentralen Steuereinheit an die Alarmanlage ausgebbar ist. Auf den Empfang einer solchen Diebstahlwarnungsnachricht hin, kann die Alarmanlage aktiviert werden.

Die zentrale Steuereinheit kann auch selbst Mittel zur Erzeugung von akustisch und/oder optisch wahrnehmbaren Alarmsignalen aufweisen, die bei Erkennung einer Manipulation der Steuerleitung aktivierbar sind.

Alternativ oder zusätzlich kann die zentrale Steuereinheit bei Erkennung einer Manipulation der Steuerleitung zur Veranlassung einer Benachrichtigung eines berechtigten Fahrzeugnutzers, insbesondere des Eigentümers, geeignet sein, beispielsweise durch Versenden einer Nachricht auf dessen Mobiltelefon. Vorzugsweise ist die zentrale Steuereinheit dazu mit einer entsprechenden Sendeeinheit ausgestattet oder verbunden. Gegebenenfalls kann auch die Nummer des Mobiltelefons in einer Speichereinheit der zentralen Steuereinheit hinterlegt sein. Es kann auch unmittelbar die Polizei oder ein Sicherheitsdienstleister durch die zentrale Steuereinheit benachrichtigbar sein. Im Rahmen einer solchen Benachrichtigung können auch fahrzeugspezifische Daten übermittelt werden, z.B. die Fahrgestellnummer des Kraftfahrzeugs und/oder eine Modellbezeichnung des Kraftfahrzeugs.

Sofern mehrere der oben genannten Maßnahmen zur Überwachung der Steuerleitung vorgesehen sind und/oder mehrere Steuerleitungen überwacht werden, kann zur Vermeidung von Fehlalarmen auch ein mehrstufiges Warnverfahren Anwendung finden. So kann beispielsweise eine Ausführungsform gewählt werden, bei der beim Ausbleiben eines Überwachungssignals auf der Steuerleitung einer einzigen Radbremse noch keine Diebstahlwarnung ausgegeben wird. Stattdessen kann ein Eintrag in einen Fehlerspeicher veranlasst werden. Erst wenn auch das Überwachungssignals auf der Steuerleitung einer weiteren Radbremse desselben Kraftfahrzeugs ausbleibt, wird eine Diebstahlwarnung ausgegeben.

Das Betätigungselement ist vorzugsweise als Stellmotor ausgebildet. Eine herkömmliche elektromechanische Feststellbremse muss somit nur unwesentlich für eine Umsetzung der Erfindung verändert werden.

Vorzugsweise ist das Betätigungselement baulich mit der elektrischen Stelleinheit in eine einzige Baueinheit integriert. Es existiert dann keine angreifbare Leitungsverbindung zwischen den beiden.

Die zentrale Steuereinheit kann funktional in ein bestehendes Steuergerät des Kraftfahrzeugs integriert werden. Separat ausgeführt kann sie kann grundsätzlich an beliebiger Stelle im Kraftfahrzeug angeordnet werden. Vorteilhaft ist jedoch eine Anordnung der zentralen Steuereinheit an einem der Feststellbremse zugehörigen Bremssattel des Kraftfahrzeugs.

Im Folgenden werden anhand der beigefügten Zeichnungen zwei bevorzugte Ausführungsbeispiele der Erfindung beschrieben. Daraus ergeben sich weitere Details, bevorzugte Ausführungsformen und Weiterbildungen der Erfindung. Dabei zeigen jeweils schematisch
- Fig. 1: den erfindungsrelevanten Aufbau einer ersten erfindungsgemäßen elektromechanischen Feststellbremse und
- Fig. 2: den erfindungsrelevanten Aufbau einer zweiten erfindungsgemäßen elektromechanischen Feststellbremse.

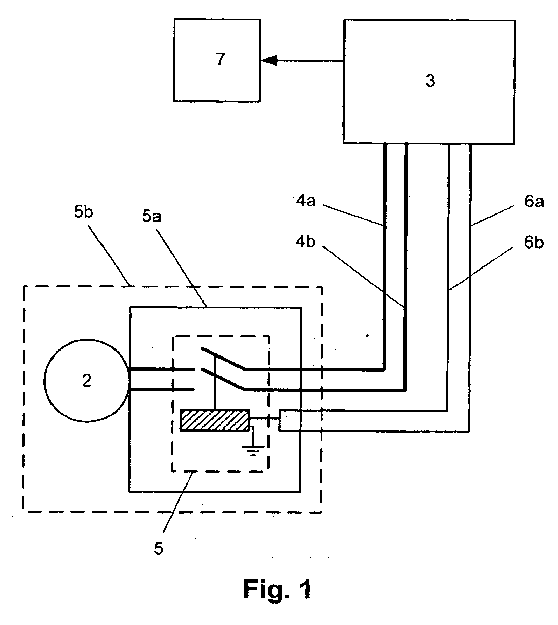

In Fig. 1 ist schematisch eine elektromechanische Feststellbremse für ein nicht eigens grafisch dargestelltes Kraftfahrzeug dargestellt.

Die elektromechanische Feststellbremse weist einen Stellmotor 2 zur Betätigung einer Radbremse und eine zentrale Steuereinheit 3 zur elektrischen Versorgung des Stellmotors 2 über eine Versorgungsleitung auf. Die Versorgungsleitung ist im vorliegenden Fall als Leitungspaar 4a,4b ausgeführt.

Durch eine Betätigung der Radbremse kann ein Abrollen des entsprechenden Rades verhindert und/oder zumindest das Rollverhalten des Kraftfahrzeugs auffällig gemacht werden.

Der als Betätigungselement dienende Stellmotor 2 ist gemeinsam mit einer ein Relais 5 enthaltenden elektrischen Stelleinheit 5a, die zur Unterbrechung der Versorgung des Betätigungselements dienen kann, vor äußerem manuellem Zugriff geschützt am Kraftfahrzeug angeordnet. Dazu ist der Stellmotor 2 gemeinsam mit der elektrischen Stelleinheit 5a in eine einzige nicht zerstörungsfrei zu öffnende Baueinheit 5b integriert.

Das Relais 5 ist über eine Steuerleitung 6a,6b mit der zentralen Steuereinheit 3 verbunden. Das Relais 5 ist durch die zentrale Steuereinheit 3 über die Steuerleitung 6a,6b ansteuerbar, um eine Unterbrechung der Versorgung des Stellmotors 2 zu veranlassen. Dazu wird eine entsprechende Spannung an die Steuerleitung 6a,6b angelegt, um das Relais 5 zu öffnen.

Eine Überwachung der Steuerleitung 6a,6b dient zur Erkennung einer eventuellen Manipulation der Steuerleitung 6a,6b. Die Steuerleitung 6a,6b ist zweidrahtig ausgeführt. Die beiden Drähte 6a und 6b der Steuerleitung sind nur innerhalb der elektrischen Stelleinheit 5a leitend miteinander verbunden. So kann durch die zentrale Steuereinheit 3 in den ersten Draht 6a eine Überwachungsspannung eingespeist werden, während durch die zentrale Steuereinheit 3 am zweiten Draht 6b eine Messung durchgeführt wird, um festzustellen, ob die Überwachungsspannung unverändert an diesem zweiten Draht 6b anliegt. Die Überwachungsspannung ist in ihrer Amplitude so dimensioniert, dass sie nicht zum Schalten des Relais 5 führt.

Wenn die Überwachungsspannung am ersten Draht 6a eingespeist, jedoch am zweiten Draht 6b nicht gemessen wird, löst die zentrale Steuereinheit 3 die Aktivierung einer Alarmanlage 7 des Kraftfahrzeugs aus.

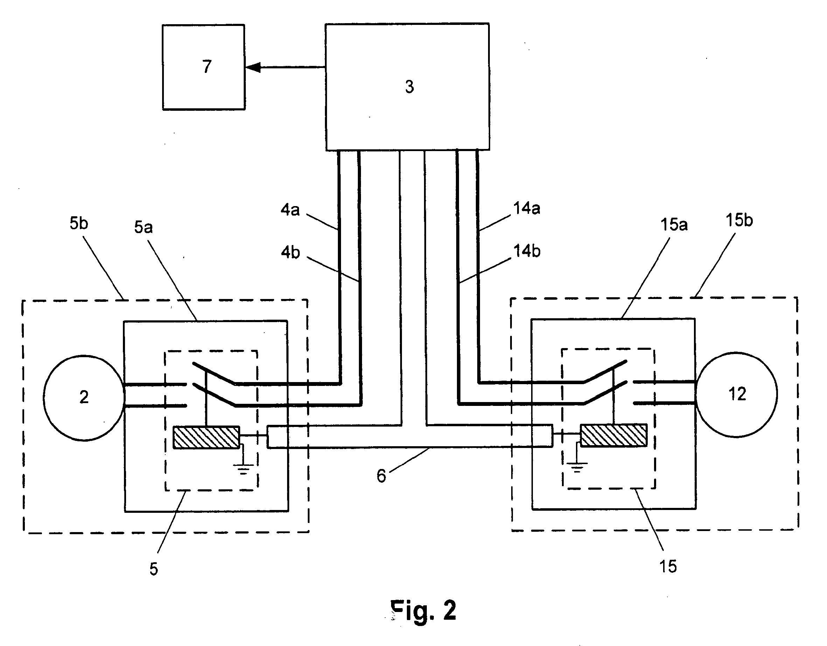

Die in Fig. 2 dargestellte Feststellbremse entspricht im Wesentlichen derjenigen von Fig. 1, jedoch werden zwei Radbremsen erfindungsgemäß versorgt und angesteuert.

Die Bezugszeichen 2, 4a, 4b, 5, 5a, 5b, 3 und 7 und die entsprechenden Elemente der Feststellbremse entsprechen im Wesentlichen denjenigen aus Fig. 1. Zudem ist eine zweite Radbremse vorgesehen mit einem Stellmotor 12, der über eine Versorgungsleitung 14a, 14b versorgbar ist.

Der als Betätigungselement dienende Stellmotor 12 ist gemeinsam mit einer ein Relais 15 enthaltenden elektrischen Stelleinheit 15a, die zur Unterbrechung der Versorgung des Betätigungselements dienen kann, ebenfalls vor äußerem manuellem Zugriff geschützt am Kraftfahrzeug angeordnet. Dazu ist der Stellmotor 12 gemeinsam mit der elektrischen Stelleinheit 15a in eine einzige nicht zerstörungsfrei zu öffnende Baueinheit 15b integriert.

Die Stelleinheiten 5a und 15a beider Radbremsen lassen sich über eine gemeinsame "durchgeschleifte" Steuerleitung 6 von der zentralen Steuereinheit 3 steuern. Die Steuerleitung 6 ist als Leitungsschleife über die beiden elektrischen Stelleinheiten 5a und 15a geführt. Die Intaktheit dieser Leitungsschleife kann überwacht werden, indem bei der zentralen Steuereinheit 3 in ein Ende der Leitungsschleife ein Überwachungssignal eingespeist wird und dessen unverändertes Anliegen am anderen Ende gemessen wird.

## Patentansprüche

1. Elektromechanische Feststellbremse für ein Kraftfahrzeug mit einem Betätigungselement (2) zur Betätigung einer Radbremse und einer zentralen Steuereinheit (3) zur elektrischen Versorgung des Betätigungselements über zumindest eine Versorgungsleitung (4a, 4b), wobei
das Betätigungselement gemeinsam mit einer elektrischen Stelleinheit (5a) zur Unterbrechung der Versorgung des Betätigungselements vor äußerem manuellem Zugriff geschützt am Kraftfahrzeug angeordnet ist, **dadurch gekennzeichnet, dass**
dass die elektrische Stelleinheit über eine zweidrahtige Steuerleitung (6a, 6b) mit der zentralen Steuereinheit verbunden ist, welche im Verlauf der Steuerleitung gegeneinander isoliert, jedoch innerhalb der elektrischen Stelleinheit elektrisch leitend miteinander verbunden sind,
dass die elektrische Stelleinheit durch die zentrale Steuereinheit über die Steuerleitung ansteuerbar ist, um eine Unterbrechung der Versorgung des Betätigungselements zu veranlassen und
dass durch die zentrale Steuereinheit eine Überwachung der Steuerleitung zur Erkennung einer Manipulation der Steuerleitung durchführbar ist, indem durch die zentrale Steuereinheit in einen ersten Draht (6a) der Steuerleitung eine Überwachungsspannung eingespeist wird und dessen unverändertes Anliegen an einem zweiten Draht (6b) der Steuerleitung durch die zentrale Steuereinheit gemessen wird.

2. Elektromechanische Feststellbremse nach Anspruch 1, **dadurch gekennzeichnet, dass** das Betätigungselement als Stellmotor ausgebildet ist.

3. Elektromechanische Feststellbremse nach Anspruch 1 oder 2, **dadurch gekennzeichnet, dass** die elektrische Stelleinheit als Relais ausgebildet ist.

4. Elektromechanische Feststellbremse nach einem der Ansprüche 1 bis 3,
**dadurch gekennzeichnet,**
**dass** das Betätigungselement baulich mit der elektrischen Stelleinheit in eine einzige Baueinheit (5b) integriert ist.

5. Elektromechanische Feststellbremse nach einem der Ansprüche 1 bis 4,
**dadurch gekennzeichnet,**
**dass** bei Erkennung einer Manipulation der Steuerleitung eine Diebstahlwarnung durch die zentrale Steuereinheit ausgebbar ist.

6. Elektromechanische Feststellbremse nach Anspruch 5, **dadurch gekennzeichnet,**
**dass** die zentrale Steuereinheit mit einer Alarmanlage (7) des Kraftfahrzeugs verbunden ist und bei Erkennung einer Manipulation der Steuerleitung eine Diebstahlwarnungsnachricht von der zentralen Steuereinheit an die Alarmanlage ausgebbar ist
und/oder
**dass** die zentrale Steuereinheit Mittel zur Erzeugung von akustisch und/oder optisch wahrnehmbaren Alarmsignalen aufweist, die bei Erkennung einer Manipulation der Steuerleitung aktivierbar sind.

7. Elektromechanische Feststellbremse nach Anspruch 5, **dadurch gekennzeichnet, dass** die zentrale Steuereinheit zur Veranlassung einer Benachrichtigung eines berechtigten Fahrzeugnutzers geeignet ist.

8. Elektromechanische Feststellbremse nach einem der Ansprüche 1 bis 7,
**dadurch gekennzeichnet,**
**dass** die elektromechanische Feststellbremse zwei Betätigungselemente zur Betätigung jeweils einer Radbremse aufweist,
**dass** jedes der beiden Betätigungselemente über zumindest eine Versorgungsleitung elektrisch von der zentralen Steuereinheit versorgbar ist,
**dass** jedes der beiden Betätigungselemente gemeinsam mit einer elektrischen Stelleinheit zur Unterbrechung der Versorgung des Betätigungselements vor äußerem manuellem Zugriff geschützt am Kraftfahrzeug angeordnet ist,
**dass** jede der beiden elektrischen Stelleinheiten über eine Steuerleitung mit der zentralen Steuereinheit verbunden ist,
**dass** jede der beiden elektrischen Stelleinheiten durch die zentrale Steuereinheit über die jeweilige Steuerleitung ansteuerbar ist, um eine Unterbrechung der Versorgung des jeweiligen Betätigungselements zu veranlassen,
**dass** für jede der beiden Steuerleitungen durch die zentrale Steuereinheit eine Überwachung zur Erkennung einer Manipulation der jeweiligen Steuerleitung durchführbar ist und
**dass** Spannungswerte beider Steuerleitungen abgegriffen und in einer Auswerteschaltung in eine einzige Messgröße umgewandelt werden.

9. Elektromechanische Feststellbremse nach einem der Ansprüche 1 bis 7,
**dadurch gekennzeichnet,**
**dass** die elektromechanische Feststellbremse zwei Betätigungselemente zur Betätigung jeweils einer Radbremse aufweist,
**dass** jedes der beiden Betätigungselemente über zumindest eine Versorgungsleitung elektrisch von der zentralen Steuereinheit versorgbar ist,
**dass** jedes der beiden Betätigungselemente gemeinsam mit einer elektrischen Stelleinheit zur Unterbrechung der Versorgung des Betätigungselements vor äußerem manuellem Zugriff geschützt am Kraftfahrzeug angeordnet ist,
**dass** die beiden elektrischen Stelleinheiten über eine gemeinsame durchgeschleifte Steuerleitung mit der zentralen Steuereinheit verbunden sind,
**dass** jede der beiden elektrischen Stelleinheiten durch die zentrale Steuereinheit über die Steuerleitung ansteuerbar ist, um eine Unterbrechung der Versorgung des jeweiligen Betätigungselements zu veranlassen,
**dass** durch die zentrale Steuereinheit eine Überwachung zur Erkennung einer Manipulation der Steuerleitung durchführbar ist.

## Claims

1. An electromechanical parking brake for a motor vehicle comprising an operating element (2) for operating a wheel brake and a central control unit (3) to supply electrical power to the operating element via at least one supply line (4a, 4b), wherein the operating element is arranged on the motor vehicle in a manner protected against external manual access together with an electrical actuating unit (5a) for interrupting the power supply to the operating element, **characterised in that** the electrical actuating unit is connected by a two-wire control line (6a, 6b) to the central control unit, which are insulated from one another in the course of the control line, but are interconnected conductively inside the electrical actuating unit, **in that** the electrical actuating unit can be controlled by the central control unit via the control line to cause an interruption in the power supply to the operating element, and **in that** the central control unit can monitor the control line to detect a manipulation of the control line by a monitoring voltage being fed into a first wire (6a) of the control line by the central control unit and by the central control unit measuring the unchanged presence of the monitoring voltage on a second wire (6b) of the control line.

2. An electromechanical parking brake according to claim 1, **characterised in that** the operating element is configured as an actuator.

3. An electromechanical parking brake according to claim 1 or claim 2, **characterised in that** the electrical actuating unit is configured as a relay.

4. An electromechanical parking brake according to any one of claims 1 to 3, **characterised in that** the operating element is structurally integrated with the electrical actuating unit into a single unit (5b).

5. An electromechanical parking brake according to any one of claims 1 to 4, **characterised in that** a theft warning can be emitted by the central control unit if a manipulation of the control line is detected.

6. An electromechanical parking brake according to claim 5, **characterised in that** the central control unit is connected to an alarm system (7) of the motor vehicle and if a manipulation of the control line is detected, a theft warning message can be emitted to the alarm system by the central control unit and/or **in that** the central control unit has means for generating acoustically and/or visually perceptible alarm signals which can be activated if a manipulation of the control line is detected.

7. An electromechanical parking brake according to claim 5, **characterised in that** the central control unit is capable of initiating notification to an authorised user of the vehicle.

8. An electromechanical parking brake according to any one of claims 1 to 7, **characterised in that** the electromechanical parking brake has two operating elements for operating a respective wheel brake, **in that** each of the two operating elements can be supplied with electrical power by the central control unit via at least one supply line, **in that** each of the two operating elements is arranged on the motor vehicle in a manner protected against external manual access together with an electrical actuating unit for interrupting the power supply to the operating element, **in that** each of the two electrical actuating units is connected to the central control unit by a control line, **in that** each of the two electrical actuating units can be controlled by the central control unit via the respective control line to cause an interruption in the power supply to the respective operating element, **in that** for each of the two control lines, the central control unit can perform a monitoring procedure to detect a manipulation of the respective control line, and **in that** voltage values of both control lines are tapped and converted into a single measured value in an evaluation circuit

9. An electromechanical parking brake according to any one of claims 1 to 7, **characterised in that** the electromechanical parking brake has two operating elements for operating a respective wheel brake, **in that** each of the two operating elements can be supplied with electrical power by the central control unit via at least one supply line, **in that** each of the two operating elements is arranged on the motor vehicle in a manner protected against external manual access together with an electrical actuating unit for interrupting the power supply to the operating element, **in that** the two electrical actuating units are connected to the central control unit by a common looped-through control line, **in that** each of the two electrical actuating units can be controlled by the central control unit via the control line to cause an interruption in the power supply to the respective operating element, **in that** the central control unit can perform a monitoring procedure to detect a manipulation of the control line.

## Revendications

1. Frein de stationnement électromécanique pour un véhicule compre-nant un élément d'actionnement (2) pour actionner un frein de roue et une unité de commande centrale (3) pour l'alimentation électrique de l'élément d'actionnement par au moins une conduite d'alimentation (4a, 4b),
l'élément d'actionnement étant monté dans le véhicule, avec une unité de réglage électrique (5a) permettant d'interrompre l'alimentation de l'élément d'actionnement en étant protégé vis-à-vis d'une action manuelle extérieure,
**caractérisé en ce que**
l'unité de réglage électrique est reliée à l'unité de commande centrale par une conduite de commande à deux fils (6a, 6b) qui sont isolés l'un de l'autre le long de la conduite de commande, mais sont toutefois reliés électriquement l'un à l'autre à la partie interne de l'unité de réglage électrique,
l'unité de réglage électrique peut être commandée par l'unité de commande centrale par l'intermédiaire de la conduite de commande pour provoquer une interruption de l'alimentation de l'élément d'actionnement, et
l'unité de commande centrale permet d'effectuer une surveillance de la conduite de commande pour identifier une manipulation de cette conduite en injectant une tension de surveillance sur un premier fil (6a) de la conduite de commande, et en mesurant son application non modifiée sur le second fil (6b) de la conduite de commande.

2. Frein de stationnement électromécanique conforme à la revendication 1,
**caractérisé en ce que**
l'élément d'actionnement est réalisé sous la forme d'un servomoteur.

3. Frein de stationnement électromécanique conforme à la revendication 1 ou 2,
**caractérisé en ce que**
l'unité de réglage électrique est réalisé sous la forme d'un relais.

4. Frein de stationnement électromécanique conforme à l'une des revendications 1 à 3,
**caractérisé en ce que**
l'élément d'actionnement est intégré avec l'unité de réglage électrique dans une seule unité (5b).

5. Frein de stationnement électromécanique conforme à l'une des revendications 1 à 4,
**caractérisé en ce que**
lors de l'identification d'une manipulation de la conduite de commande une alarme antivol peut être déclenchée par l'unité de commande centrale.

6. Frein de stationnement électromécanique conforme à la revendication 5,
**caractérisé en ce que**
l'unité de commande centrale est reliée à une installation d'alarme (7) du véhicule et en cas d'identification d'une manipulation de la conduite de commande, une information d'alarme antivol peut être délivrée par l'unité de commande centrale à l'installation d'alarme, et/ou
l'unité de commande centrale comporte des moyens permettant de produire des signaux d'alarme perceptibles acoustiques et/ou optiques qui sont activables lors de l'identification d'une manipulation sur la conduite de commande.

7. Frein de stationnement électromécanique conforme à la revendication 5,
**caractérisé en ce que**
l'unité de commande centrale est susceptible de provoquer une information d'un utilisateur du véhicule autorisé.

8. Frein de stationnement électromécanique conforme à l'une des revendications 1 à 7,
**caractérisé en ce que**
le frein de stationnement électromécanique comprend deux éléments d'actionnement respectivement destinés à actionner un frein de roue, chacun de ces deux éléments d'actionnement peut être alimenté en énergie électrique par l'unité de commande centrale par l'intermédiaire d'au moins une conduite d'alimentation,
chacun des deux éléments d'actionnement est monté dans le véhicule avec une unité de réglage électrique permettant d'interrompre l'alimentation de l'élément d'actionnement en étant protégé vis-à-vis d'une action manuelle externe,
chacune des deux unités de réglage électrique est reliée à l'unité de commande centrale par une conduite de commande,
chacune des deux unités de réglage électriques peut être commandée par l'unité de commande centrale par l'intermédiaire de la conduite de commande respective pour provoquer une interruption de l'alimentation de l'élément d'actionnement respectif,
pour chacune des deux conduites de commande, on peut effectuer par l'intermédiaire de l'unité de commande centrale une surveillance pour identifier une manipulation sur la conduite de commande respective, et des valeurs de tension des deux conduites de commande sont prélevées et transformées en une grandeur de mesure unique dans un circuit d'exploitation.

9. Frein de stationnement électromécanique conforme à l'une des revendications 1 à 7,
**caractérisé en ce que**
le frein de stationnement électromécanique comprend deux éléments d'actionnement destinés respectivement à actionner un frein de roue, chacun des deux éléments d'actionnement peut être alimenté en énergie électrique par l'unité de commande centrale par l'intermédiaire d'au moins une conduite d'alimentation,
chacun des deux éléments d'actionnement est monté, dans le véhicule avec une unité de réglage électrique permettant d'interrompre l'alimentation de l'élément d'actionnement en étant protégé vis-à-vis d'une action manuelle externe,
les deux unités de réglage électrique sont reliées à l'unité de commande centrale par une conduite de commande bouclée commune,
chacune des deux unités de réglage électrique peut être commandée par l'unité de commande centrale par l'intermédiaire de la conduite de commande pour provoquer une interruption de l'alimentation de l'élément d'actionnement respectif,
l'unité de commande centrale permet d'effectuer une surveillance pour permettre d'identifier une manipulation de la conduite de commande.
